# EUROPEAN PATENT SPECIFICATION

(11) **EP 3 042 072 B1**
(45) Date of publication and mention of the grant of the patent: **22.11.2017**
(21) Application number: 14781049.3
(22) Date of filing: 29.08.2014
(51) Int. Cl.: F03B 5/00

(54) **PRECESSION FLUID TURBINE**
KREISELBEWEGUNGSFLÜSSIGKEITSTURBINE
ROUE DE TURBINE À FLUIDE DE PRÉCESSION

(30) Priority: 05.09.2013 CZ 20130681
(43) Date of publication of application: 13.07.2016
(73) Proprietor: AMK Energy Comp, s.r.o., 110 00 Praha I-Nové Mestro (CZ)
(72) Inventor: SEDLACEK, Miroslav, 15006 Praha 5 (CZ); HOSTIN, Stanislav, 919 08 Boleraz 144 (SK); JANIK, Igor, 434 01 Most (CZ)
(74) Representative: Andera, Jiri
(86) International application number: PCT/CZ2014/000093
(87) International publication number: WO 2015/032368

(56) References cited:
- EP-B1- 1 015 760
- CZ-B6- 302 361
- CZ-U1- 24 162
- CZ-U1- 24 439
- GB-A- 829 607

## Description

### Technical Field

The invention relates to a precession fluid turbine comprising a stator with an intake for fluid and with an outlet for fluid and in the stator a bladeless rolling rotor is set on holding equipment. The rotor is formed by a body of rotational shape. The holding equipment is adapted to allow the rolling of the rotor along the interior side of the stator. The rolling rotor is connected by a mechanism to an electric current generator placed in a watertight case.

### Prior Art

Fluid machines already exist that have a stator with a liquid intake and a liquid outlet, and with a bladeless rolling rotor placed on holding equipment, comprising of a body with a rotational shape. The holding equipment is adapted to allow rolling of the rolling rotor along the interior wall of the stator. After liquid is led into the stator, the flow of liquid causes the rotor to touch the interior wall of the stator and it starts to roll along the interior wall of the stator. At least part of the shaft of the rotor precesses. Such machines are sometimes called precession machines.

Czech patent no. 284483 and European patent EP 1015760 B1 discloses a rolling fluid machine comprising a fluid storage tank, provided with an inlet and at least with one outlet nozzle, and in the area of the outlet nozzle there is mounted, on a holding device, at least one rolling rotor represented by a body of a rotary shape. The rolling rotor is set so that it can roll along the interior wall of the outlet nozzle.

Working on the same principle are fluid machines disclosed in European patent EP 1082538 B1, Czech patent no. 294708 and no. 302361 and Czech utility model no. 7606, no. 17908, and no. 18890.

The disadvantage common to all known rolling or precession machines/turbines is that they do not allow for the efficient transfer of torque generated by the rolling of the rotor along the inner wall of the stator to an electric current generator.

### Disclosure of the Invention

The problem in question is solved by a precession fluid turbine comprising a stator with an intake for fluid and with an outlet for fluid and in the stator a bladeless rolling rotor is set on a holding equipment. The rotor is formed by a body of rotational shape. The holding equipment is adapted to allow the rolling of the rotor along the interior side of the stator. The rolling rotor is connected by a mechanism to an electric current generator placed in a watertight case. The mechanism comprises a crankshaft placed between the rolling rotor and the electric current generator and the crankshaft is provided with a magnetic clutch,

In this case, a "magnetic clutch" means equipment that can transfer not only torque, but also translational power, and the actual transfer is not done by the mechanical connection of two parts, but by the effect of the magnetic force between the two parts. Such equipment comprises both the existing, usual magnetic clutches for the transfer of torque and various arrangements of magnets for translational transfer of power, comprising magnetic multipliers.

The invention allows efficient transfer of torque created by rolling of the rotor along the interior wall of the stator to the electric current generator.

According to an advantageous embodiment the magnetic clutch is set on the crankshaft in a way that one half of the magnetic clutch is placed inside the watertight case and the other half of the magnetic clutch is placed outside of the watertight case.

According to another advantageous embodiment the holding equipment comprises a support firmly attached to the stator and provided with an at least partially round surface on the part turned towards the rotor.

According to another advantageous embodiment the rotor is in a place where it sits on a support provided with a recess the shape of which corresponds to the round surface of the end of the support.

According to another advantageous embodiment the crankshaft is on the side of the rolling rotor pivoted in an opening provided on the axis of the rolling rotor.

According to another advantageous embodiment the crankshaft has a first permanent magnet attached on the end turned towards the rolling rotor, while the first permanent magnet is set above a second permanent magnet and the second permanent magnet is attached to the surface of the rolling rotor at a place on its lateral axis.

According to another advantageous embodiment one half of the magnetic clutch is set on the end of the crankshaft inside a watertight case and the second half of the magnetic clutch is set outside of the watertight case on the surface of the rolling rotor at a place of its lateral axis.

### Brief Description of Drawings

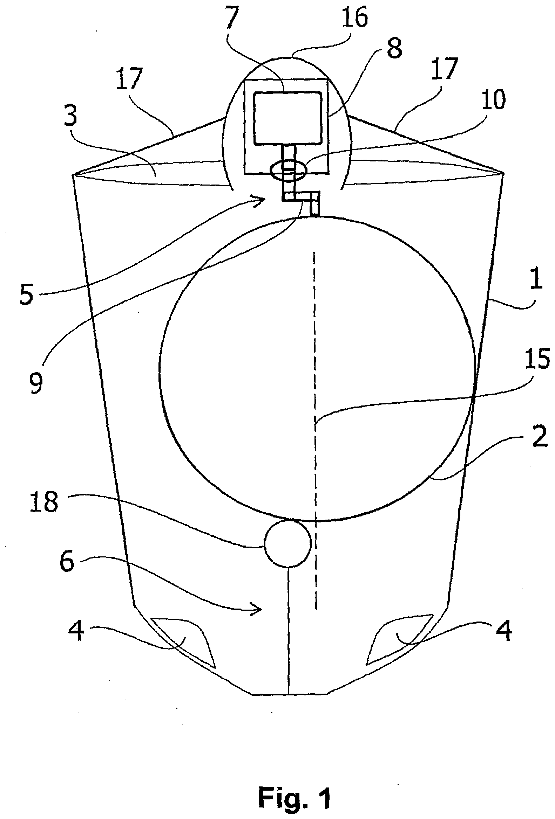

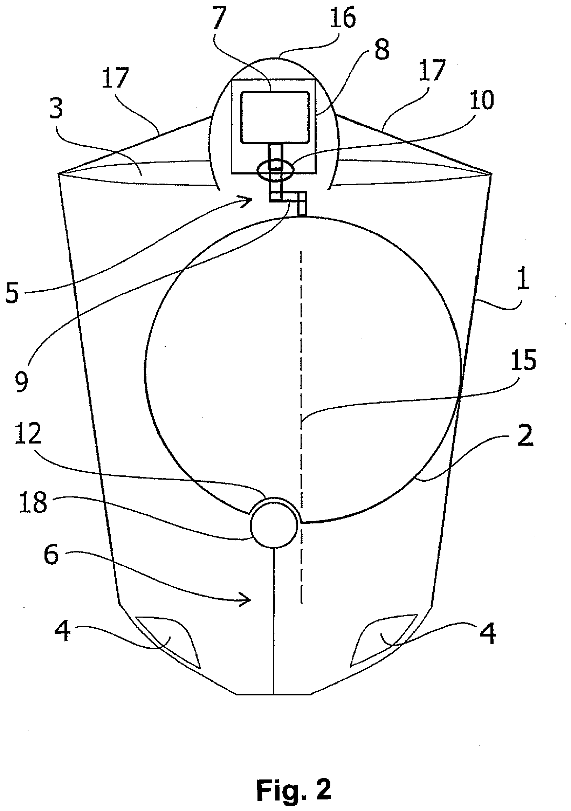

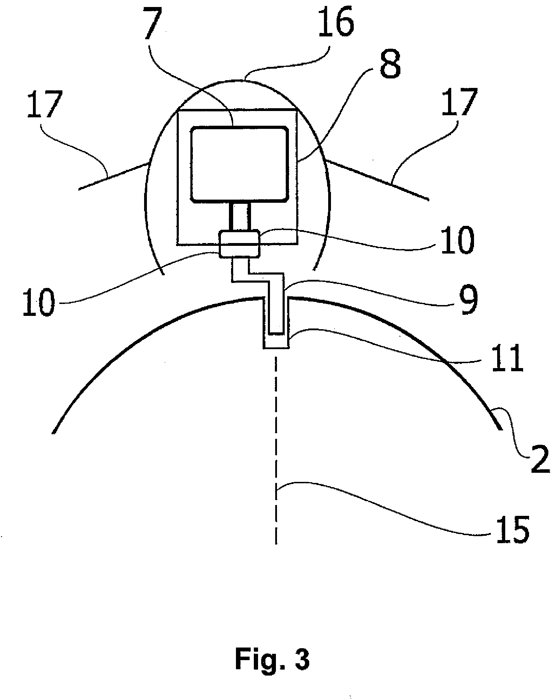

On figures 1 and 2 are schematic drawings of two versions of the precession fluid turbine in accordance with the invention. On figures 3, 4, and 5 are various versions of the connection of an electric current generator to a rolling rotor.

### Description of preferred embodiments

The precession fluid turbine according to fig. 1 and fig. 2 has a stator 1 with a fluid intake3 on the upper edge of the stator 1 and with four liquid outlets 4 on the bottom part of the stator 1. In the stator 1 a bladeless rolling rotor 2 is set on holding equipment 6. The rotor 2 is formed by a body of rotational shape. The holding equipment 6 is adapted to allow rolling of the rolling rotor 2 along the interior wall of the stator 1. The rolling rotor 2 may have any rotational shape. The holding equipment 6 may be made by any known mechanism that permits rolling of the rolling rotor 2 along the interior wall of the stator 1.

For the embodiment in fig. 1 and fig. 2, the holding equipment 6 is formed by a bar-like support 18 that is firmly attached to the bottom of the stator 1 and juts upwards towards the rotor 2. On the end of the support 18 facing the rotor 2 is a ball that supports the rotor 2. Of course, instead of a ball, an at least partly round surface facing the rotor can be used on the end of the support 18.

For the advantageous embodiment according to fig. 2, the rotor 2 is at a place where it sits on the support 18, provided with a recess 12, the shape of which corresponds to the rounded surface of the end of the support 18.

The rolling rotor 2 is connected by a mechanism 5 to an electric current generator 7, placed in a watertight case 8. The watertight case 8 is fixed to the chamber 16 that is set with the help of holders 17 on the stator 1.

The mechanism 5 comprises a crankshaft 9 set between the rolling rotor 2 and the electric current generator 7. The crankshaft 9 is provided with a magnetic clutch 10. In this case, 'magnetic clutch' means equipment that can transfer not only torque but also translational force, and the actual transfer is done not by the mechanical connection of two parts, but instead by the effect of the magnetic force between those two parts. Such equipment comprises both existing, usual magnetic clutches for transfer of torque and various arrangements of magnets for translational transfer of power, comprising magnetic multipliers.

The magnetic clutch 10 is set on the crankshaft 9 so that one half of the magnetic clutch 10 is placed inside the watertight case 8, and the other half of the magnetic clutch 10 is set outside of the watertight case 8. The 'halves' of the magnetic clutch 10 mean those parts of the magnetic clutch 10 between which the magnetic force is working.

The crankshaft 9 can be connected to the rolling rotor 2 by any known means. Several advantageous embodiments are shown in fig. 3, fig. 4, and fig. 5.

In the embodiment in fig. 3, the crankshaft 9 forms a crank that is on the side of the rolling rotor 2 pivoted in an opening 11 provided on the axis 15 of the rolling rotor 2.

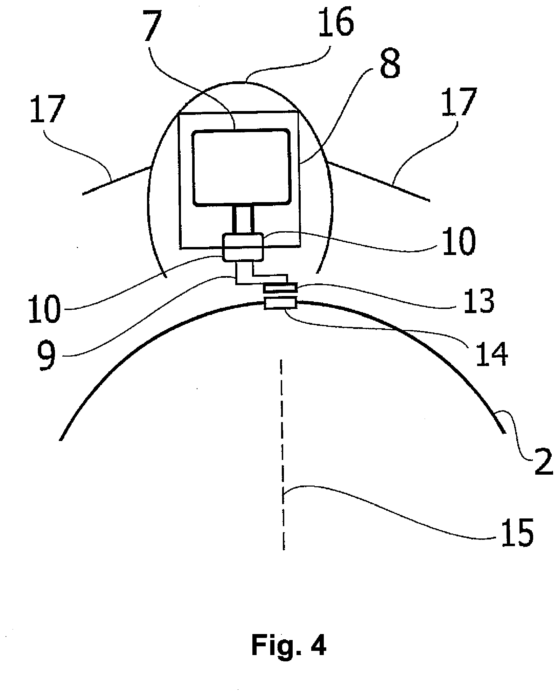

In the embodiment in fig. 4, the crankshaft 9 forms a crank that has a first permanent magnet 13 fixed to the end turned towards the rolling rotor 2. That first permanent 13 magnet is set above a second permanent magnet 14. The second permanent magnet 14 is fixed to the surface of the rolling rotor 2 on a place on its lateral axis 15.

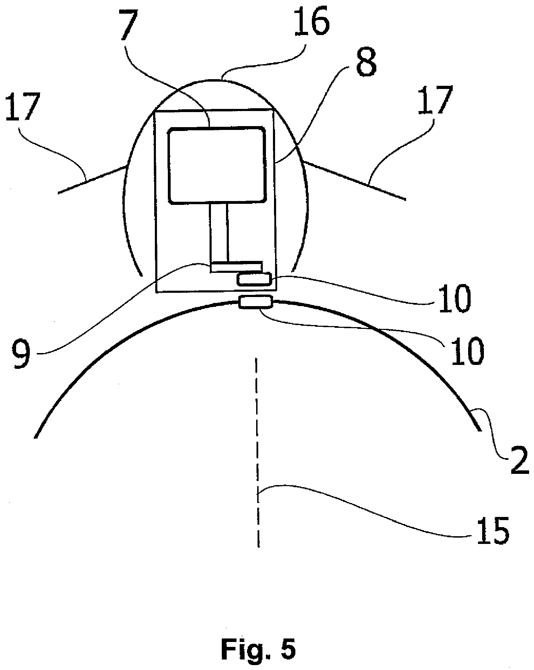

For the embodiment according to fig. 5, half of the magnetic clutch 10 is set on the end of the crankshaft 9 inside a watertight case 8 and the other half of the magnetic clutch 10 is set outside of the watertight case 8 on the surface of the rolling rotor 2 at a place on its lateral axis 15.

All of the embodiments of the precession turbine, described above, work the same way. Through the intake 3, liquid is released into the stator 1, then the liquid flows out of the stator 1 through the outlets 4. When liquid flows through the stator 1, the rotor 2 begins to roll along the interior wall of the stator 1. The axis 15 of the rotor 2 then makes precession movement.

The torque generated by the rolling of the rotor 2 along the interior wall of the stator 1 is transferred to the electric current generator 7 by the crankshaft 9 and the magnetic clutch 10. The electric current generated is carried away by watertight electrical wiring that is not depicted.

## Claims

1. A precession fluid turbine, comprising a stator (1) with an intake (3) for fluid and with an outlet (4) for fluid and in the stator (1) a bladeless rolling rotor (2) is set on a holding equipment (6), the rotor (2) is formed by a body of rotational shape, and the holding equipment (6) is adapted to allow the rolling of the rotor (2) along the interior side of the stator (1), while the rolling rotor (2) is connected by a mechanism (5) to an electric current generator (7) placed in a watertight case (8), **characterised in that** the mechanism (5) comprises a crankshaft (9) placed between the rolling rotor (2) and the electric current generator (7) and the crankshaft (9) is provided with a magnetic clutch (10).

2. The precession fluid turbine according to claim 1, **characterised in that** the magnetic clutch (10) being set on the crankshaft (9) so that one half of the magnetic clutch (10) is placed inside the watertight case (8) and the other half of the magnetic clutch (10) is placed outside of the watertight case (8).

3. The precession fluid turbine according to claim 1 or 2, **characterised in that** the holding equipment (6) comprises a support (18) firmly attached to the stator (1) and provided with an at least partially round surface on the part turned towards the rotor (2).

4. The precession fluid turbine according to claim 3, **characterised in that** the rotor (2) is in a place where it sits on a support (18) provided with a recess (12), the shape of which corresponds to the round surface of the end of the support (18).

5. The precession fluid turbine according to any of claims 1 through 4, **characterised in that** the crankshaft (9) is on the side of the rolling rotor (2) pivoted in an opening (11) provided on the axis (15) of the rolling rotor (2).

6. The precession fluid turbine according to any of claims 1 through 4, **characterised in that** the crankshaft (9) has a first permanent magnet (13) attached on the end turned towards the rolling rotor (2), while the first permanent magnet (13) is set above a second permanent magnet (14) and the second permanent magnet (14) is attached to the surface of the rolling rotor (2) at a place on its lateral axis (15).

7. The precession fluid turbine according to any of claims 1 through 4, **characterised in that** one half of the magnetic clutch (10) is set on the end of the crankshaft (9) inside the watertight case (8) and the second half of the magnetic clutch (10) is set outside of the watertight case (8) on the surface of the rolling rotor (2) at a place of its lateral axis (15).

## Patentansprüche

1. Eine Kreiselbewegungsflüssigkeitsturbine, die einen Stator (1) mit einem Einlass (3) für Flüssigkeiten und einem Auslass (4) für Flüssigkeiten umfasst und im Stator (1) ist ein schaufelloser Rolling Rotor (2) auf einer Haltevorrichtung (6) angebracht, wobei der Rotor (2) aus einem Körper mit Rotationsform besteht und die Haltevorrichtung (6) ist so ausgerichtet, dass das Walzen des Rotors (2) entlang der Innenseite des Stators (1) möglich ist, während der Rolling Rotor (2) durch einen Mechanismus (5) an einen Stromgenerator (7) angeschlossen ist, der sich in einem wasserdichten Gehäuse (8) befindet, **dadurch gekennzeichnet, dass** der Mechanismus (5) eine Kurbelwelle (9) umfasst, die sich zwischen dem Rolling Rotor (2) und dem Stromgenerator (7) befindet, wobei die Kurbelwelle (9) über eine Magnetkupplung (10) verfügt.

2. Die Kreiselbewegungsflüssigkeitsturbine gemäß Anspruch 1, **dadurch gekennzeichnet, dass** die Magnetkupplung (10) so auf der Kurbelwelle (9) angebracht ist, dass eine Hälfte der Magnetkupplung (10) sich im wasserdichten Gehäuse (8) und die andere Hälfte der Magnetkupplung (10) sich außerhalb des im wasserdichten Gehäuses (8) befindet.

3. Die Kreiselbewegungsflüssigkeitsturbine gemäß Anspruch 1 bzw. 2., **dadurch gekennzeichnet, dass** die Haltevorrichtung (6) eine Auflage (18) umfasst, welche fest am Stator (1) angebracht ist und eine zumindest teilweise runde Oberfläche auf dem Teil in Richtung des Rotors (2) hat.

4. Die Kreiselbewegungsflüssigkeitsturbine gemäß Anspruch 3, **dadurch gekennzeichnet, dass** der Rotor (2) ist an der Stelle, wo dieser auf der Auflage (18) aufsitzt mit einer Aushöhlung (12) ausgerüstet, die eine Forme hat, welche der runden Oberfläche am Ende der Auflage (18) entspricht.

5. Die Kreiselbewegungsflüssigkeitsturbine gemäß den Ansprüchen 1 bis 4, **dadurch gekennzeichnet, dass** die Kurbelwelle (9) sich auf der Seite des Rolling Rotors (2) befindet, geschwenkt in eine Öffnung (11) auf der Achse (15) des Rolling Rotors (2).

6. Die Kreiselbewegungsflüssigkeitsturbine gemäß den Ansprüchen 1 bis 4, **dadurch gekennzeichnet, dass** die Kurbelwelle (9) einen ersten Permanentmagneten (13) hat, der an dem Ende, das in Richtung des Rolling Rotors (2) schaut, angebracht ist, wobei der erste Permanentmagnet (13) sich oberhalb des zweiten Permanentmagnets (14) befindet und der zweite Permanentmagnet (14) an der Oberfläche des Rolling Rotors (2) an einer Stelle auf seiner Querachse (15) angebracht ist.

7. Die Kreiselbewegungsflüssigkeitsturbine gemäß den Ansprüchen 1 bis 4, **dadurch gekennzeichnet, dass** eine Hälfte der Magnetkupplung (10) sich am Ende der Kurbelwelle (9) innerhalb des wasserdichten Gehäuses (8) und die andere Hälfte der Magnetkupplung (10) sich außerhalb des wasserdichten Gehäuses (8) auf der Oberfläche des Rolling Rotors (2) an einer Stellen auf seiner Querachse (15) befindet.

## Revendications

1. Une turbine à fluide en précession, comprenant un stator (1) doté d'une admission (3) pour un fluide et d'une évacuation (4) pour un fluide ainsi que, dans le stator (1), d'un rotor rotatif sans lame (2) monté sur un équipement servant de support (6), le rotor (2) étant formé par un corps de forme rotative et l'équipement servant de support (6) étant adapté pour permettre la rotation dudit rotor (2) le long de la face intérieure du stator (1), tandis que le rotor rotatif (2) est connecté par un mécanisme (5) à un générateur de courant électrique (7) placé dans un logement étanche (8), est **caractérisée en ce que** le mécanisme (5) comprenne un vilebrequin (9) placé entre le rotor rotatif (2) et le générateur de courant électrique (7), le vilebrequin (9) étant doté d'un embrayage magnétique (10).

2. La turbine à fluide en précession est, conformément à la revendication 1, **caractérisée en ce que** l'embrayage magnétique (10) soit monté sur le vilebrequin (9) de sorte qu'une moitié de l'embrayage magnétique (10) soit placée à l'intérieur du logement étanche (8) et l'autre moitié de l'embrayage magnétique (10) soit placée à l'extérieur du logement étanche (8).

3. La turbine à fluide en précession est, conformément à la revendication 1 ou 2, **caractérisée en ce que** l'équipement servant de support (6) comprenne un support (18) fermement attaché au stator (1) et doté d'une surface au moins partiellement arrondie sur la partie tournée vers le rotor (2).

4. La turbine à fluide en précession est, conformément à la revendication 3, **caractérisée en ce que** le rotor (2) repose sur un support (18) doté d'un évidement (12), dont la forme correspond à la surface arrondie de l'extrémité dudit support (18).

5. La turbine à fluide en précession est, conformément à n'importe quelle revendication 1 à 4, **caractérisée en ce que** le vilebrequin (9) se trouve du côté du rotor rotatif (2) tourné vers une ouverture (11) prévue sur l'axe (15) du rotor rotatif (2).

6. La turbine à fluide en précession est, conformément à n'importe quelle revendication 1 à 4, **caractérisée en ce que** le vilebrequin (9) dispose d'un premier aimant permanent (13) fixé sur l'extrémité tournée vers le rotor rotatif (2), tandis que le premier aimant permanent (13) est placé au-dessus d'un second aimant permanent (14), ledit second aimant permanent (14) étant attaché sur la surface du rotor rotatif (2) au niveau de son axe latéral (15).

7. La turbine à fluide en précession est, conformément à n'importe quelle revendication 1 à 4, **caractérisée en ce qu'**une moitié de l'embrayage magnétique (10) soit placée à l'extrémité du vilebrequin (9) à l'intérieur du logement étanche (8) et la seconde moitié de l'embrayage magnétique (10) soit placée à l'extérieur du logement étanche (8) sur la surface du rotor rotatif (2) au niveau de son axe latéral (15).
